# EUROPÄISCHE PATENTSCHRIFT

(11) **EP 1 178 550 B1**
(45) Veröffentlichungstag und Bekanntmachung des Hinweises auf die Patenterteilung: **08.12.2010**
(21) Anmeldenummer: 01118655.8
(22) Anmeldetag: 03.08.2001
(51) Int. Cl.: H01M 6/38

(54) **Aktivierbare Batterie für einen elektronischen Artilleriezünder**
Activable battery for an artillery initiator
Batterie activable pour un allumeur de l'artillerie

(30) Priorität: 04.08.2000 DE 10038066
(43) Veröffentlichungstag der Anmeldung: 06.02.2002
(73) Patentinhaber: JUNGHANS Microtec GmbH, 78655 Dunningen-Seedorf (DE)
(72) Erfinder: Glatthaar, Karl, 78727 Oberndorf a/N (DE); Müller, Wolfgang, 78087 Mönchweiler (DE); Rüdenauer, Werner, 91154 Roth (DE); Winterhalter, Walter, 78144 Tennenbronn (DE); Zinell, Alexander, 78713 Schramberg (DE)
(74) Vertreter: Diehl Patentabteilung

(56) Entgegenhaltungen:
- CH-A- 297 558
- DE-A- 3 718 788
- US-A- 3 945 845
- US-A- 4 218 525
- US-A- 4 612 264

## Beschreibung

Die Erfindung betrifft eine aktivierbare Batterie für einen elektronischen Artilleriezünder gemäß dem Oberbegriff des Anspruches 1.

Eine solche Batterie vom Lithium-Thionylclorid-Typ mit einer Vielzahl von Zellen ist beispielsweise aus der DE 37 18 788 A1 bekannt. Diese bekannte Batterie enthält eine mit dem Elektrolyten gefüllte zerbrechbare Ampulle. Innerhalb eines Behälters ist ein Stapel von inerten Metallscheiben enthalten, die auf einer Oberfläche eine Lithiumschicht und auf der anderen Oberfläche eine Schicht von gebundenem Ruß aufweisen. Die solchermaßen beschichteten Metallscheiben sind voneinander durch Separatoren getrennt und bilden den Stapel der Vielzellen-Batterie. Der Stapel ist mit Elektroden kontaktiert. Die Ampulle mit dem Elektrolyten ist im Inneren des weiter oben erwähnten Behälters angeordnet. Außerhalb des Behälters ist ein kinetisches Gewicht vorgesehen, das so dimensioniert ist, daß es die Ampulle zerbricht, wenn auf die Reservebatterie eine bestimmte Beschleunigung ausgeübt wird.

Für elektronische Artilleriezünder kommen derartige aktivierbare Batterien zur Anwendung, die in der Regel durch die Abschußbeschleunigung des mit dem Artilleriezünder versehenen Geschosses im Waffenrohr aktiviert werden. In der Batterie ist - wie erwähnt worden ist - eine mit einem Elektrolyten gefüllte Ampulle mit einer z.B. von einem Massekörper bzw. einem kinetischen Gewicht gebildeten Aktivierungsvorrichtung verbunden, die beispielsweise durch ein Federelement oder durch einen Abreißquerschnitt abgestützt ist. Die Aktivierung der Batterie wird bekanntermaßen dadurch ausgelöst, daß beim Erreichen einer definierten Beschleunigung die voreingestellte Federkraft des Federelementes überschritten wird oder der Abreißquerschnitt abreißt. Bei dieser Aktivierung schlägt die Ampulle auf einem beispielsweise vom Batterieboden gebildeten Widerlager auf und zerbricht, wobei der in der Ampulle befindliche Elektrolyt freigesetzt wird. Der Elektrolyt dringt dann in die Zellen der Batterie ein, wonach die Batterie eine elektrische Spannung liefert.

Diese einfachen Auslösemechanismen der von einem Federelement oder einem Abreißquerschnitt gebildeten Aktivierungsvorrichtung haben sich bewährt wenn die minimale zur Verfügung stehende Abschußbeschleunigung in einem Waffenrohr eine ausreichende Größe besitzt. Diese soll weit über möglichen Störeinflüssen wie ungewollten Stößen bei der Handhabung derartiger Batterien liegen. Bei neuen modernen Waffensystemen, speziell bei der Artillerie, haben sich einerseits die Belastungen bei der Handhabung und bei der automatischen Zuführung in das Patronenlager erhöht und andererseits sind durch die verlängerten Waffenrohr die minimal zur Verfügung stehenden Abschußbeschleunigungen weiter abgesunken. Diese beiden Gesichtspunkte, d.h. die Belastungen bei der Handhabung und bei der automatischen Zuführung in das Patronenlager und die Reduktion der minimal zur Verfügung stehenden Abschußbeschleunigung infolge verlängerter Waffenrohre geraten hierbei in Bezug auf den festzulegenden Aktivierungslevel der Batterien miteinander in Konflikt. Bei neuen und modernen Waffensystemen ist nicht auszuschließen, daß die minimale zur Verfügung stehende Abschußbeschleunigung, bei der eine Batterie der eingangs genannten Art mit hoher Zuverlässigkeit aktiviert werden muß, auf dem gleichen, teilweise aber auch schon auf einem niedrigeren Aktivierungslevel liegt als der Aktivierungslevel, wie er bei einem ungewollten freien Fall eines Zünders mit eingesetzter aktivierbarer Batterie aus normaler Handhabungshöhe auftritt. Wie ohne weiteres klar ist, führt das dazu, daß bei solchen ungewollten Handhabungs-Belastungen bzw. einem freien Fall des Zünders aus der Handhabungshöhe die Batterie ungewollt vorzeitig aktiviert wird und der Zünder dadurch anschließend nicht mehr einsatzfähig ist.

Aus dem Stand der Technik sind diverse Batterie-Konzepte auf Basis einer Aktivierung durch Zerstörung einer mit Elektrolyt gefüllten Ampulle bekannt: Die US 4 612 264 A beschäftigt sich mit einer Batterie für ein Zündersystem, bei dem eine Ampulle mit einem Schlagbolzen, welcher axial verschiebbar in einer röhrenförmigen Halterung gelagert ist, zerschlagbar ist. Über in den Schlagbolzen eingreifende Rückhaltekugeln und eine über eine Feder in Position gehaltene Hülse wird der Schlagbolzen in Abstand zur Ampulle gehalten. Bei entsprechend hoher Beschleunigung der Batterie während der Handhabung kann es zu einem Zusammendrücken der Feder durch die Hülse und zu einer Freigabe des Schlagbolzens durch die Rückhaltekugeln und damit zur Zerstörung der Ampulle kommen. Die US 3 945 558 A offenbart eine mit einem Elektrolyt gefüllte Ampulle, in deren Innenraum ein mit Schneidblättern versehener Kolben angeordnet ist. Der Kolben wird durch eine Feder in Abstand zum zerbrechbaren Boden der Ampulle gehalten. Die CH 297 558 A zeigt eine Elektrolyt-gefüllte Ampulle, die in einem axial verschiebbaren Träger gehaltert ist. Träger und Ampulle werden in Ruhestellung über eine Druckfeder in Abstand zu einem zum Zerschlagen der Ampulle vorgesehenen Amboss gehalten.

In Kenntnis dieser Gegebenheiten liegt der Erfindung die Aufgabe zugrunde, eine aktivierbare Batterie der eingangs genannten Art mit zuverlässiger Freifall-Sicherung zu schaffen.

Diese Aufgabe wird erfindungsgemäß durch die Merkmale des Anspruches 1 gelöst. Bevorzugte Ausbildungen der erfindungsgemäßen aktivierbaren Batterie sind in den Unteransprüchen gekennzeichnet.

Dadurch, daß erfindungsgemäß die zum Zerbrechen der mit dem Elektrolyten gefüllten Ampulle vorgesehene Aktivierungsvorrichtung ein zur Auswertung der Dauer des jeweils auf die Batterie einwirkenden Kraftstoßes, d.h. Impulses, vorgesehenes Zeitglied aufweist, ist es möglich, das Beschleunigungsprofil eines ungewollten Stoßes bei der Handhabung oder eines freien Falles aus der Handhabungshöhe von einer Abschußbeschleunigung im Waffenrohr deutlich zu unterscheiden. Bei einem freien Fall auf einen harten Untergrund liegt die Dauer des Impulses im µsec-Bereich. Beim Abschuß aus einem Waffenrohr liegt die Impulsdauer im msec-Bereich. Mit Hilfe der erfindungsgemäßen aktivierbaren Batterie kann das Problem bekannter aktivierbarer Batterien, welche nur die Impulshöhe, d.h. die Impuls-Amplitude, ausnutzen, dadurch gelöst werden, daß die bislang nur die Beschleunigungsgröße auswertende Aktivierungsvorrichtung durch eine die Impulsdauer auswertende Aktivierungsvorrichtung ersetzt wird. Belastungen bei der Handhabung, beispielsweise durch ungewollte Stöße, bei der automatischen Zuführung in das Patronenlager oder bei einem freien Fall eines Zünders mit eingesetzter Batterie aus der Handhabungshöhe sind bei der erfindungsgemäßen aktivierbaren Batterie nicht relevant, d.h. sie führen zu keinem Ausfall der Batterie.

Vorteilhaft ist die kleine, kompakte Bauweise der gesamten Anordnung, die kostengünstig zu fertigen ist. Die Impulssicherung ist innerhalb des Batteriegehäuses daher bei äußeren Einwirkungen nicht störanfällig.

Ein Ausführungsbeispiel der erfindungsgemäßen aktivierbaren Batterie für einen elektronischen Artilleriezünder ist in der Zeichnung dargestellt und wird nachfolgend beschrieben, wobei die Erfindung selbstverständlich nicht auf das dargestellte Ausführungsbeispiel beschränkt ist. Es zeigen:
- Figur 1: einen Schnitt durch die Batterie, und
- Figur 2: eine perspektivische Ansicht des Massekörpers der Batterie gemäß Figur 1 in Blickrichtung von schräg oben.

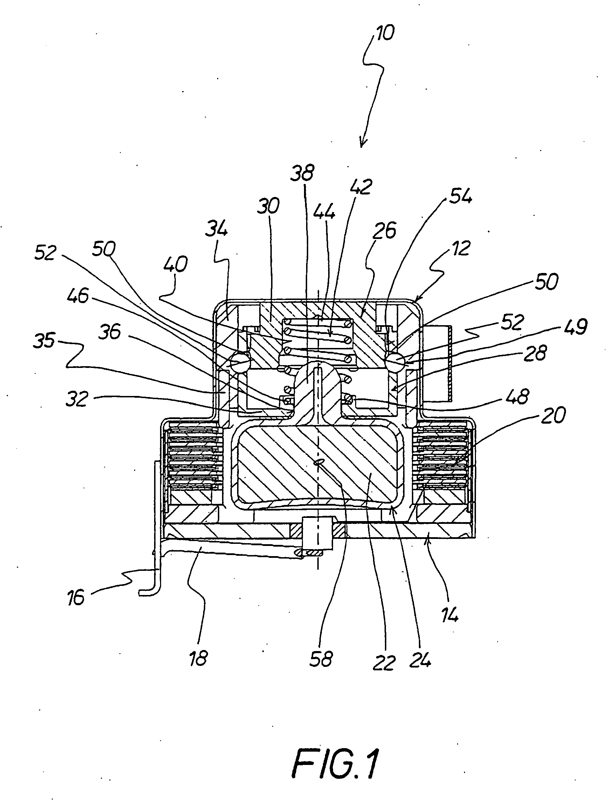

Figur 1 zeigt in einer Schnittdarstellung eine Ausbildung der aktivierbaren Batterie 10. Die Batterie 10 weist ein becherförmiges Batteriegehäuse 12 auf, das durch einen Deckel 14 dicht verschlossen ist. Das Batteriegehäuse 12 besteht aus einem tiefgezogenen Metallblech und ist mit einer Elektrode 16 elektrisch leitend verbunden. Durch den Deckel 14 erstreckt sich eine zweite Elektrode 18 elektrisch isoliert hindurch. Die Elektroden 16 und 18 sind mit einer stapelförmigen Batteriezelle 20 kontaktiert, die durch einen Elektrolyten 22 galvanisch aktivierbar ist. Der Elektrolyt 22 befindet sich in einer Ampulle 24, die beispielsweise aus Glas besteht. Der mit dem Elektrolyten 22 gefüllten Ampulle 24 ist eine Aktivierungsvorrichtung 26 zugeordnet, die zum definierten Zerbrechen der Ampulle 24 dient. Zu diesem definierten Zerbrechen der Ampulle weist die Aktivierungsvorrichtung 26 ein Zeitglied auf, das zur Auswertung bzw. zur Bestimmung der Dauer des jeweils auf die Batterie 10 einwirkenden Kraftstoßes bzw. Impulses vorgesehen ist. Bei dem Zeitglied handelt es sich um ein mechanisches Zeitglied, das einen zylindrischen Ampullen-Haltekörper 28 und einen Massekörper 30 aufweist. Der Ampullen-Haltekörper 28 weist einen Boden 32 und eine Zylinderhülse 34 auf. Die Zylinderhülse 34 ist in eine Stützhülse 35 eingesetzt, die sich an der Batteriezelle 20 abstützt. Der Boden 32 des Ampullen-Haltekörpers 28 ist mit einem zentralen Loch 36 ausgebildet. Die zerbrechbare Ampulle 24 weist einen Zapfen 38 auf, der sich durch das zentrale Loch 36 im Boden 32 des Ampullen-Haltekörpers 28 hindurcherstreckt.

Der Massekörper 30 der Aktivierungsvorrichtung 26 weist ein hutartiges Querschnittsprofil auf, d.h. er ist mit einem zentralen Sackloch 40 ausgebildet, das für den Ampullen-Zapfen 38 vorgesehen ist.

Zwischen dem Ampullen-Haltekörper 28 und dem Massekörper 30 ist ein Druckfederelement 42 angeordnet, das als Schraubenfeder ausgebildet ist. Das Druckfederelement 42 ist mit seinem einen Ende 44 im zentralen Sackloch 40 des Massekörpers 30 und mit seinem davon entfernten zweiten Ende 46 am Boden 32 des Ampullen-Haltekörpers 28 festgelegt. Zu diesem Zwecke ist der Boden 32 mit einem Kragen 48 ausgebildet.

Die Zylinderhülse 34 ist entlang ihres Innenumfangs mit einer Ringnut 49 und der Ampullen-Haltekörper 28 ist entlang seines Umfanges gleichmäßig beabstandet mit Löchern 50 ausgebildet, in welchen Kugeln 52 angeordnet sind. Die Kugeln 52 liegen in der Ringnut 49 und stehen aus den Löchern 50 des Ampullen-Haltekörpers 28 vor und ragen in den Massekörper 30.

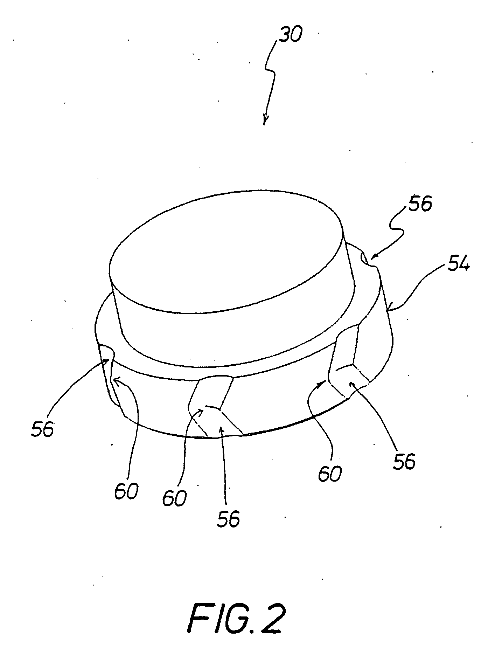

Der Massekörper 30 weist eine Zylindermantelfläche 54 auf, die - wie aus Figur 2 deutlich ersichtlich ist - mit einer der Anzahl Löcher 50 in der Zylinderhülse 34 des Ampullen-Haltekörpers 28 entsprechenden Anzahl zick-zack-förmiger Rillen 56 ausgebildet ist. Die zick-zack-förmigen Rillen 56 sind wie die Löcher 50 voneinander äquidistant beabstandet. Die Kugeln 52 stehen in die zick-zack-förmigen Rillen 56 hinein, wie aus Figur 1 ersichtlich ist.

Nachfolgend wird die Funktion der Batterie 10 gemäß Figur 1 beschrieben:

Aktivierung der Batterie 10 bei einem Abschuß eines eine Batterie 10 gemäß Figur 1 aufweisenden Geschosses aus einem Waffenrohr:

Durch die Abschußbeschleunigung wird der Massekörper 30 gegen die Wirkung des Druckfederelementes 42 in Richtung zum Deckel 14 der Batterie 10, d.h. in Richtung zur mit dem Elektrolyten 22 gefüllten Ampulle 24 bewegt. Durch den Eingriff der Kugeln 52 in die am Umfang der Zylindermantelfläche 54 des Massekörpers 30 ausgebildeten zick-zack-förmig abgewinkelten Rillen 56 führt der Massekörper 30 keine lineare axiale Bewegung aus. Vielmehr muß sich der Massekörper 30 zuerst während des entsprechenden axialen Bewegungsabschnittes um die zentrale Längsachse 58 in die eine Drehrichtung und daran anschließend in die entgegengesetzte Drehrichtung drehen, um den axialen Bewegungsweg zur Aktivierung der Batterie 10 durchzuführen. Diese Drehungen bzw. die Umlenkung des Massekörpers 30 bildet durch das Trägheitsmoment des Massekörpers 30 ein Zeitglied, das hier also von einem Zick-Zack-Element gebildet ist. Wie ohne weiteres klar ist, muß die Abschußbeschleunigung mit einer bestimmten Größe über einen bestimmten, relativ langen Zeitraum im msec-Bereich wirksam sein, damit der Massekörper 30 seine, die Ampulle 24 zerbrechende Endstellung erreicht. Wenn der Massekörper 30 der Aktivierungsvorrichtung 26 die besagte Endstellung erreicht hat, wird der Ampullen-Haltekörper 28 über die Kugeln 52 freigegeben. Durch die dabei noch weiter anstehende bzw. wirksame Abschußbeschleunigung und/oder durch die nun mechanisch gespannte Druckfeder 42 wird die Ampulle 24 gegen den Deckel 14 der Batterie beschleunigt, wobei die Ampulle 24 zerbricht und der in der Ampulle 24 befindliche Elektrolyt 22 freigegeben wird. Der Elektrolyt 22 dringt in die Batteriezelle 20 ein, so daß an den Elektroden 16 und 18 eine entsprechende elektrische Spannung ansteht.

### Nichtaktivierung bei Stoßbelastung:

Bei einem ungewollten Stoß bei der Handhabung oder bei der automatischen Zuführung in das Patronenlager oder bei einem freien Fall eines mit der Batterie 10 kombinierten Artilleriezünders aus der jeweiligen Handhabungshöhe läuft die Batterie 10 wie oben beschrieben an, d.h. der Massekörper 30 führt eine axiale Bewegung und gleichzeitig eine Drehbewegung durch. Da Stöße unter Umständen wohl ein großes Impulsmaximum besitzen, dafür aber wesentlich kurzzeitiger sind, führt der Massekörper 30 nur eine Drehbewegung und simultan eine axiale Bewegung höchstens bis zur Umlenkung 60 der zick-zack-förmigen Rillen 56 durch und wird bereits vorher gestoppt und bewegt sich danach in die Ausgangsposition zurück. Die Batterie 10 wird also nicht aktiviert. Von Wichtigkeit ist hierbei, daß die Beschleunigung des Massekörpers 30 durch einen Stoß bereits abgeklungen sein muß, wenn der Massekörper 30 die besagten Umlenkstellen 60 der zick-zack-förmigen Rillen 56 erreicht. Durch geeignete Dimensionierung des Massekörpers 30, d.h. seines Trägheitsmomentes, läßt sich das problemlos exakt einstellen.

Bei der in der Zeichnung dargestellten Batterie 10 handelt es sich - wie bereits erwähnt worden ist - nur um ein die Erfindung nicht beschränkendes Ausführungsbeispiel. Der Effekt, die Beschleunigungen zwischen einem ungewollten Stoß und einem Abschuß aus einem Waffenrohr über die Einwirkzeit, d.h. über die Impulsdauer, zu differenzieren, ist auf unterschiedliche Arten ausnutzbar. Von Wichtigkeit ist, daß ein Zeitglied vorhanden ist und daß zur Aktivierung nach Ablauf des Zeitgliedes noch eine ausreichende Beschleunigung für den weiteren Ablauf der Aktivierungsvorrichtung 26 gegeben ist. Bei dem Zeitglied kann es sich um ein mechanisches, um ein hydraulisches oder um ein pneumatisches Zeitglied handeln. Das Zeitglied kann eine klassische Doppelbolzensicherung oder beispielsweise einen mechanischen Hemmregler aufweisen oder nur die Reibung ausnutzen.

Zur Aktivierung, d.h. zum Zerbrechen der Ampulle 24, kann die auf den Massekörper 30 einwirkende Abschußbeschleunigung in Kombination mit der Masse der Ampulle 24 und dem Ampullen-Haltekörper 28 ausgenutzt werden bzw. ausreichen. Zusätzlich kann noch das Druckfederelement 42 unterstützend oder auch als alleinige Aktiverungsvorrichtung 26 eingesetzt werden, die durch primäre Bewegung gespannt wird. Desgleichen ist es möglich, daß die Ampulle 24 keine oder nur eine sehr kleine Bewegung ausführt, wobei diese kleine Bewegung im Bereich von Spieltoleranzen liegen kann, wenn die Masse des Ampullen-Haltekörpers 28 und des Auslöseelementes, d.h. des Massekörpers 30, in Kombination mit der Abschußbeschleunigung dazu in der Lage ist, die Ampulle 24 durch die entsprechenden Massenkräfte zu zerbrechen.

### Bezugsziffernliste:

- 10: Batterie
- 12: Batteriegehäuse (von 10)
- 14: Deckel (von 10)
- 16: Elektrode (von 10)
- 18: zweite Elektrode (von 10)
- 20: Batteriezelle (von 10)
- 22: Elektrolyt in 24)
- 24: Ampulle (für 22)
- 26: Aktivierungsvorrichtung (für 24)
- 28: Ampullen-Haltekörper (für 24)
- 30: Massekörper (von 26)
- 32: Boden (von 28)
- 34: Zylinderhülse (von 28)
- 35: Stützhülse (für 34)
- 36: zentrales Loch (in 32)
- 38: Zapfen (von 24)
- 40: zentrales Sackloch (von 30)
- 42: Druckfederelement (zwischen 28 und 30)
- 44: erstes Ende (von 42)
- 46: zweites Ende (von 42)
- 48: Kragen (an 32)
- 49: Ringnut (in 34)
- 50: Löcher (in 28)
- 52: Kugeln (in 50)
- 54: Zylindermantelfläche (von 30)
- 56: zick-zack-förmige Rillen (in 54)
- 58: zentrale Längsachse (von 28 und 30)
- 60: Umlenkstellen (von 56)

## Patentansprüche

1. Aktivierbare Batterie (10) für einen elektronischen Artilleriezünder mit einer mit einem Elektrolyten (22) gefüllten Ampulle (24) und mit einer Aktivierungsvorrichtung (26) zum Zerbrechen der Ampulle (24), welche ein zur Auswertung der Dauer des jeweils auf die Batterie (10) einwirkenden Impulses vorgesehenes Zeitglied aufweist, wobei
a) das Zeitglied in einem zylindrischen Ampullen-Haltekörper (28) einen drehbeweglichen und axial verstellbeweglichen Massekörper (30) mit einer Zylindermantelfläche (54) aufweist, die mit mindestens einer zick-zack-förmigen Rille (56) ausgebildet ist,
b) in dem Ampullen-Haltekörper (28) mindestens eine in die zugehörige zick-zack-förmige Rille (56) eingreifende Kugel (52) gelagert ist, und
c) zwischen dem Massekörper (30) und dem Ampullen-Haltekörper (28) ein Druckfederelement (42) vorgesehen ist.

2. Aktivierbare Batterie nach Anspruch1,
wobei der Ampullen-Haltekörper (28) einen Boden (32) und eine Zylinderhülse (34) aufweist, wobei der Boden (32) mit einem zentralen Loch (36) und die Ampulle (24) mit einem Zapfen (38) ausgebildet ist,
der sich durch das Loch (36) im Boden (32) des Ampullen-Haltekörpers (28) hindurcherstreckt.

3. Aktivierbare Batterie nach Anspruch 2,
wobei der Massekörper (30) mit einem zentralen Sackloch (40) für den Ampullen-Zapfen (38) ausgebildet ist, wobei das Druckfederelement (42) mit seinem einen Ende (44) im Sackloch (40) und mit seinem zweiten Ende (46) am Boden (32) des Ampullen-Haltekörpers anliegt.

4. Aktivierbare Batterie nach Anspruch 2 oder 3,
wobei der Massekörper (30) über den Ampullen-Haltekörper (28) und die Kugeln (52) in der Zylinderhülse (34) axial- und gleichzeitig drehbeweglich hängt, und die Zylinderhülse (34) über eine Stützhülse (35) und über eine Batteriezelle (20) auf einem Deckel (14) abgestützt ist.

## Claims

1. Activatable battery (10) for an electronic artillery fuze having an ampoule (24) which is filled with an electrolyte (22) and having an activation apparatus (26) for breaking up the ampoule (24), which activation apparatus (26) has a timer, which is provided in order to evaluate the duration of the respective pulse acting on the battery (10), wherein
a) the timer has a mass body (30) in a cylindrical ampoule holding body (28), which mass body (30) can rotate, can be moved linearly axially and has a cylindrical envelope surface (54) which has at least one zigzag-shaped groove (56),
b) at least one ball (52) which engages in the associated zigzag-shaped groove (56) is mounted in the ampoule holding body (28), and
c) a compression spring element (42) is provided between the mass body (30) and the ampoule holding body (28).

2. Activatable battery according to Claim 1,
wherein the ampoule holding body (28) has a base (32) and a cylindrical sleeve (54), wherein the base (32) has a central hole (36) and the ampoule (24) has a pin (38) which passes through the hole (36) in the base (32) of the ampoule holding body (28).

3. Activatable battery according to Claim 2,
wherein the mass body (30) has a central blind hole (40) for the ampoule pin (38), wherein one end (44) of the compression spring element (42) is located in the blind hole (40), and its second end (46) rests on the base (32) of the ampoule holding body.

4. Activatable battery according to Claim 2 or 3,
wherein the mass body (30) is suspended via the ampoule holding body (28) and the balls (52) in the cylindrical sleeve (34) such that it can move axially and can rotate at the same time, and the cylindrical sleeve (34) is supported on a cover (14) via a supporting sleeve (35) and via a battery cell (20).

## Revendications

1. Batterie activable (10) pour un détonateur d'artillerie électronique comprenant une ampoule (24) remplie d'un électrolyte (22) et comprenant un dispositif d'activation (26) pour rompre l'ampoule (24), lequel présente un élément de temporisation prévu pour interpréter la durée de l'impulsion qui agit à chaque fois sur la batterie (10),
a) l'élément de temporisation présentant dans un corps de maintien d'ampoule (28) cylindrique un corps de masse (30) à mobilité rotative et à mobilité de positionnement axial muni d'une surface d'enveloppe de cylindre (54), lequel est réalisé avec au moins une rainure (56) en forme de zigzag,
b) au moins une bille (52) qui vient en prise dans la rainure (56) en forme de zigzag correspondante étant logée dans le corps de maintien d'ampoule (28) et
c) un élément ressort de compression (42) étant prévu entre le corps de masse (30) et le corps de maintien d'ampoule (28).

2. Batterie activable selon la revendication 1, le corps de maintien d'ampoule (28) présentant un fond (32) et une douille cylindrique (34), le fond étant configuré avec un trou central (36) et l'ampoule (24) avec un tenon (38) qui s'étend à travers le trou (36) dans le fond (32) du corps de maintien d'ampoule (28).

3. Batterie activable selon la revendication 2, le corps de masse (30) étant réalisé avec un trou borgne (40) central pour le tenon d'ampoule (38), l'élément ressort de compression (42) reposant avec l'une de ses extrémités (44) dans le trou borgne (40) et avec sa deuxième extrémité (46) sur le fond (32) du corps de maintien d'ampoule (28).

4. Batterie activable selon la revendication 2 ou 3, le corps de masse (30) étant suspendu en mobilité axiale et en même temps rotative au-dessus du corps de maintien d'ampoule (28) et les billes (52) dans la douille cylindrique (34) et la douille cylindrique (34) étant soutenue sur un couvercle (14) par le biais d'une douille support (35) et par le biais d'une cellule de batterie (20).
